Europäisches Patentamt

European Patent Office

Office européen des brevets

(11) Publication number: **0 393 280**
**A2**

## EUROPEAN PATENT APPLICATION

(21) Application number: **89312670.6**

(22) Date of filing: **05.12.89**

(51) Int. Cl.5: **H02M 3/335**

(30) Priority: **20.04.89 US 340983**

(43) Date of publication of application:
**24.10.90 Bulletin 90/43**

(84) Designated Contracting States:
**DE FR GB IT**

(71) Applicant: **THE BABCOCK & WILCOX COMPANY**
**1010 Common Street, P.O. Box 60035**
**New Orleans, Louisiana 70160(US)**

(72) Inventor: **Bastijanic, Edward**
**7064 Bristlewood Drive**
**Concord Ohio 44077(US)**
Inventor: **Molnar, Richard J.**
**3101 Reeves Road**
**Willoughby Ohio 44094(US)**

(74) Representative: **Cotter, Ivan John et al**
**D. YOUNG & CO. 10 Staple Inn**
**London WC1V 7RD(GB)**

(54) **Power supplies.**

(57) A switching power supply comprises a transformer (14) having a primary (22) and a secondary (18), a power transistor (Q3), and a control circuit (16) connected to the power transistor for controlling current passing through the primary. A power-up circuit (24) includes a Darlington pair (20) of transistors which charge a capacitor (C1) connected to an input of the control circuit (16). A regulated voltage at the control circuit (16) is provided by a zener diode (Z) connected to an input of the Darlington pair (20). The secondary (18) is connected to a second capacitor (C2) which in turn is connected, through a diode (D1), to the input of the control circuit (16). As current flows through the secondary (18), the second capacitor (C2) is charged to take over the function of supplying a control voltage to the control circuit (16). As the second capacitor (C2) charges to above the zener voltage of the zener diode (Z), the reverse bias switches off the Darlington pair (20) thereby eliminating this source of drain from power lines ( +, -) connected to the primary (22).

FIG.I

This invention to power supplies and methods of operating same.

A switching electrical power supply differs from a linear electrical power supply in many ways. One of these is that a switching power supply requires a control circuit to modulate power transfer. This control circuit needs power to be functional; hence, this power must be tapped from the incoming power line.

Normally, a drop resistor is used, the drop resistor being connected to the line to bleed just enough power to get the switching power supply control circuit into a functional state. Unfortunately, the drop resistor is usually large in size and wattage due to the huge voltage drop across it. The bleed resistor usually feeds a capacitor and sometimes a zener diode for regulation. This voltage drop consumes a large amount of power continuously and, thus, lowers the power supply efficiency.

According to a first aspect of the invention there is provided a power supply comprising:
power line means for supplying line power;
a transformer having a primary connected to the power line means, and at least one secondary;
control means connected to the primary for regulating current flowing through the primary, the control means having an input for receiving a control voltage for regulating the current flowing through the primary;
a first capacitor connected between the input of the control means and the power line means;
transistor means connected between the input of the control means and the power line means for charging the first capacitor when the transistor means is on;
voltage regulating means connected between the power line means and the transistor means for applying a regulated voltage to the transistor means to turn the transistor means on for charging the first capacitor, the regulating voltage being slightly less than the control voltage;
a second capacitor connected to the secondary for being charged to slightly above the regulated voltage; and
rectifying means connected between the second capacitor and the input of the control means for passing current to the first capacitor to charge the first capacitor to slightly above the regulated voltage for turning the voltage regulating means off which in turn turns the transistor means off to disconnect the input of the control means from the power line means, the input of the control means being supplied with control voltage at slightly above the regulated voltage by the second capacitor.

According to a second aspect of the invention there is provided a method of operating a power supply to supply power in an efficient manner, the power supply having a transformer with a primary winding and at least one secondary winding, and the primary winding being connected to one of a pair of power output lines, the method comprising:
controlling the flow of current through the primary winding using a control circuit operated by a control voltage;
initially supplying the control voltage by current tapped from one of the power lines through a transistor arrangement which is turned on by a voltage regulator operating at a regulated voltage which is slightly less than the control voltage; and
charging a capacitor up to the control voltage by rectified current passing through the secondary winding, the capacitor being connected to the control circuit for supplying the control voltage to the control circuit and for switching off the transistor arrangement.

According to a further aspect of the invention there is provided a method of operating a power supply which includes a control circuit for controlling the current through the primary winding of a transformer, which includes initially supplying control voltage to the control circuit from a power line through transistor means, and thereafter turning the transistor means off and continuing the supply of control voltage to the control circuit from a secondary winding of the transformer and a capacitor connected to the secondary winding.

A preferred embodiment of the invention described hereinbelow provides a switching power supply circuit which can be manufactured as a stand alone product. The circuit includes a control portion which draws power only until the switching power supply is up and running. No power is drawn thereafter. The power to the control portion of the power supply circuit operates independently of time. Power is fed to the control circuit for as long as is needed to build a secondary voltage to a selected value. At this point, power to the control portion of the circuit is turned off. If the applied input power is now disconnected briefly, the circuit immediately responds by supplying power to the control portion until the circuit regains the secondary voltage value. The overall efficiency of the power supply is not impaired by the circuitry provided by the embodiment of the invention, as was the case in the prior art.

The preferred switching power supply is simple in design, rugged in construction and economical to manufacture.

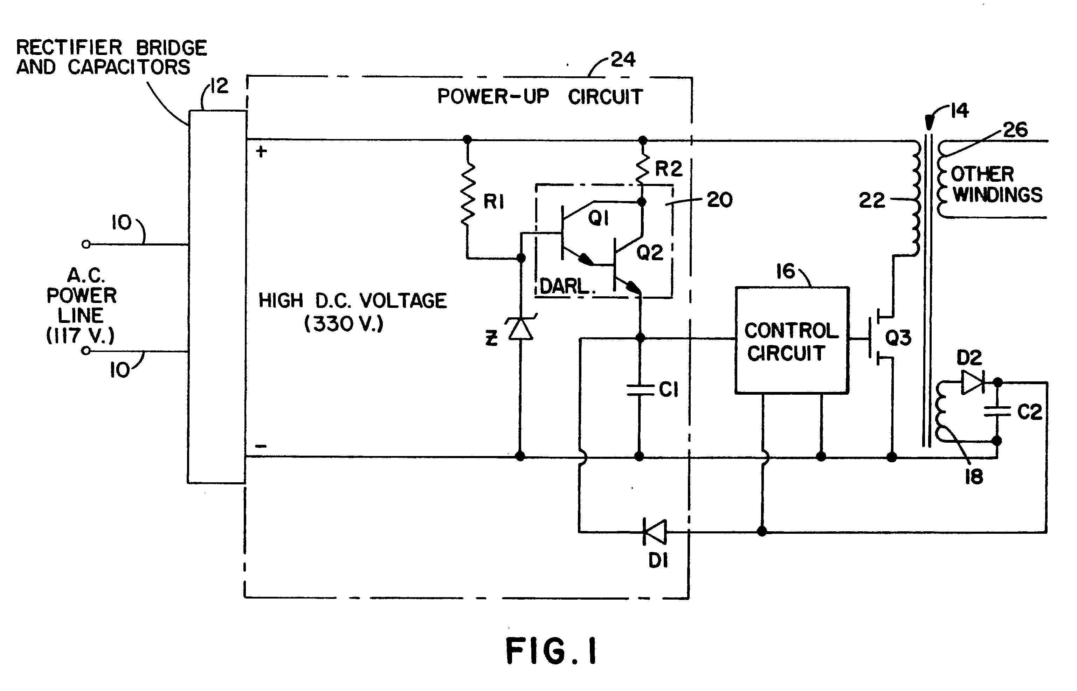

The invention will now be further described, by way of illustrative and non-limiting example, with reference to the accompanying drawing, the sole figure of which is a circuit diagram of a switching power supply according to a preferred embodiment of the invention.

The drawing shows a power-up circuit 24 for a power supply which draws ac power from power lines 10, 10 over a voltage doubler/rectifier bridge with capacitors 12 which keeps the dc voltage around 330 Vdc, for 117 Vac/230 Vac operation respectively. The high dc voltage is initially supplied via positive (+) and negative (-) high dc voltage output lines to transistor means 20 which is in the form of a pair of transistors Q1, Q2 connected in a Darlington configuration and which is supplied by current through a resistor R1. The transistor means 20 is connected to a control input of a control circuit 16 which has an output that drives a power transistor Q3 to draw current through a primary winding or coil 22 connected to the power lines from the bridge 12. The primary winding 22 forms part of a transformer 14 having at least one secondary winding or coil 18. Other windings 26 are provided in the transformer 14 for supplying power to other elements being powered at various levels by the power supply.

Voltage regulating means in the form of a zener diode Z is connected between the resistor R1 and one of the high dc voltage output lines.

Once ac power is applied via the power lines 10, the voltage is rectified by the diode bridge 12 and a high dc voltage is developed across the capacitors therein. The resistor R1 biases the zener diode Z and the transistors Q1 and Q2. Since the transistors Q1 and Q2 are in a Darlington configuration, only an extremely small current is required to bias the zener diode Z and the base of the transistor Q1. Therefore, the resistor R1 can be of very high impedance. A resistor R2, connected as shown, limits the surge as the current that flows through the transistors Q1 and Q2 quickly charges a first capacitor C1, connected as shown. A diode D1, connected as shown, prevents the secondary elements, especially a second capacitor C2, connected as shown, from loading the power-up circuit 24. The capacitor C1 will charge until it nearly reverse biases the transistors Q1 and Q2 with respect to the zener voltage across the zener diode Z. This keeps a constant voltage across the capacitor C1 to feed the control circuit 16. The control circuit 16 thus has enough power to function and starts modulating the power transistor Q3, which is connected to the primary winding 22 of the transformer 14. This in turn starts to build a dc voltage across the capacitor C2, since a diode D2 (connected as shown) rectifies the ac voltage developed across the secondary 18. The control circuit 16 allows this dc voltage to increase until it reaches a voltage at which it will be regulated. This regulated voltage is designed to be set at a couple of volts above the zener voltage of the zener diode Z. As the capacitor C2 builds to this voltage, it will forward bias the diode D1 and cause the capacitor C1 to charge to over a volt higher than the zener voltage of the zener diode Z. This in turn reverse biases both the transistors Q1 and Q2, thereby shutting both transistors off. The control circuit 16 is then being powered entirely from the secondary voltage at the winding 18 while at the same time regulating it. With both the transistors Q1 and Q2 off, there is negligible power loss in the power-up circuit 24.

Advantages of the above-described arrangement include the fact that the power-up circuit 24 draws power only until the second capacitor C2 is charged up for supplying control voltage to the control circuit 16. After that, virtually no power is drawn by the power-up circuit 24. The above-described arrangement also operates independently of time in that it feeds power to the control circuit 16 for as long as is needed to build a secondary voltage to the desired level. Once this secondary voltage takes over, the power-up circuit 24 is immediately turned off. If the applied input power is disconnected briefly, the circuit immediately responds by supplying voltage to the control circuit 16 via the power-up circuit 24, until the secondary voltage is regained. The overall efficiency of the power supply is not hindered by this start up circuitry, as it is with prior methods.

The above-described arrangement can be utilised with a variety a dc voltage levels simply by changing the zener voltage value and regulated secondary voltage level.

## Claims

1. A power supply comprising:
power line means (10, 12) for supplying line power;
a transformer (14) having a primary (22) connected to the power line means (10, 12), and at least one secondary (18);
control means (16) connected to the primary (22) for regulating current flowing through the primary (22), the control means (16) having an input for receiving a control voltage for regulating the current flowing through the primary;
a first capacitor (C1) connected between the input of the control means (16) and the power line means (10, 12);
transistor means (20) connected between the input of the control means (16) and the power line means (10, 12) for charging the first capacitor (C1) when the transistor means is on;
voltage regulating means (Z) connected between the power line means (10, 12) and the transistor means (20) for applying a regulated voltage to the transistor means to turn the transistor means on for charging the first capacitor (C1), the regulating voltage being slightly less than the control voltage;

a second capacitor (C2) connected to the secondary (18) for being charged to slightly above the regulated voltage; and

rectifying means (D1, D2) connected between the second capacitor (C2) and the input of the control means (16) for passing current to the first capacitor (C1) to charge the first capacitor to slightly above the regulated voltage for turning the voltage regulating means (2) off which in turn turns the transistor means (20) off to disconnect the input of the control means (16) from the power line means (10, 12), the input of the control means (16) being supplied with control voltage at slightly above the regulated voltage by the second capacitor (C2).

2. A power supply according to claim 1, wherein the transistor means (20) comprises a pair of transistors (Q1, Q2) connected to each other in a Darlington configuration, and a high impedance resistor (R1) connected between the power line means (10, 12) and the Darlington configuration for tapping a small amount of current from the power line means to the Darlington configuration.

3. A power supply according to claim 2, wherein the second capacitor (C2) is connected across the secondary (18), and the rectifying means comprises a first diode (D1) connected from one end of the second capacitor (C2) to an end of the first capacitor (C1) which is connected to the input of the control means (16), and a second diode (D2) connected between one end of the secondary (18) and said one end of the second capacitor (C2).

4. A power supply according to claim 2, wherein the power line means (10, 12) comprises a pair of ac power lines (10) and a rectifying bridge with capacitors (12) connected to the pair of ac power lines (10) and having a pair of high dc voltage output lines (+, -), the high impedance resistor (R1) is connected to one (+) of the high dc voltage output lines (+, -), and the voltage regulating means (Z) comprises a zener diode connected between the other (-) of the high dc voltage output lines and a junction between the high impedance resistor (R1) and the Darlington configuration (20).

5. A power supply according to claim 4, wherein the second capacitor (C2) is connected across the secondary (18), and the rectifying means comprises a first diode (D1) connected from one end of the second capacitor (C2) to an end of the first capacitor (C1) which is connected to the input of the control means (16), and a second diode (D2) connected between one end of the secondary (18) and said one end of the second capacitor (C2).

6. A power supply according to claim 5, wherein the primary (22) has one end connected to one (+) of the high dc voltage output lines (+, -), a power transistor (Q3) is connected between an opposite end of the primary (18) and the other (-) of the high dc voltage output lines, and the power transistor (Q3) has a base connected to the control means (16) for controlling the current passing through the primary (22).

7. A power supply according to claim 6, wherein the transistors (Q1, Q2) in the Darlington configuration (20) comprise a first transistor (Q1) having a base connected to the high impedance resistor (R1) and a second transistor (Q2) having a base connected to an emitter of the first transistor (Q1), a second resistor (R2) is connected to collectors of the first and second transistors (Q1, Q2), and the transistors (Q1, Q2) are connected to said one (+) of the high dc voltage output lines (+, -) via the second resistor (R2).

8. A power supply according to claim 7, wherein an emitter of the second transistor (Q2) is connected to the input of the control means (16).

9. A method of operating a power supply to supply power in an efficient manner, the power supply having a transformer (14) with a primary winding (22) and at least one secondary winding (18), and the primary winding being connected to one (+) of a pair of power output lines (+, -), the method comprising:

controlling the flow of current through the primary winding (22) using a control circuit (16) operated by a control voltage;

initially supplying the control voltage by current tapped from one of the power lines (+, -) through a transistor arrangement (20) which is turned on by a voltage regulator (Z) operating at a regulated voltage which is slightly less than the control voltage; and

charging a capacitor (C1) up to the control voltage by rectified current passing through the secondary winding (18), the capacitor being connected to the control circuit (16) for supplying the control voltage to the control circuit and for switching off the transistor arrangement (20).

FIG.1

RECTIFIER BRIDGE AND CAPACITORS

POWER-UP CIRCUIT — 24

A.C. POWER LINE (117 V.)

HIGH D.C. VOLTAGE (330 V.)

OTHER WINDINGS

CONTROL CIRCUIT

DARL.

EP 0 393 280 A2